# EUROPÄISCHE PATENTSCHRIFT

(11) **EP 0 931 642 B1**
(45) Veröffentlichungstag und Bekanntmachung des Hinweises auf die Patenterteilung: **18.12.2002**
(21) Anmeldenummer: 99100438.3
(22) Anmeldetag: 11.01.1999
(51) Int. Cl.: B29D 30/08

(54) **Verfahren zur Herstellung eines Fahrzeugluftreifens**
Method for producing a pneumatic vehicle tyre
Procédé de fabrication d'un pneumatique pour véhicules

(30) Priorität: 15.01.1998 DE 19801254
(43) Veröffentlichungstag der Anmeldung: 28.07.1999
(73) Patentinhaber: Continental Aktiengesellschaft, 30165 Hannover (DE)
(72) Erfinder: Glinz, Michael, 37535 Neustadt (DE); Petschick, Claus, 30926 Seelze (DE); Trilken, Bernhard, 31867 Lauenau (DE)

(56) Entgegenhaltungen:
- EP-A- 0 344 928
- EP-B- 0 319 588

## Beschreibung

Die gegenständliche Erfindung betrifft ein Verfahren zur Herstellung eines Fahrzeugluftreifens mit einem Laufstreifen, einer Radialkarkasse, einem zumindest einlagigen Gürtel und einer spiralförmig gewickelten Gürtelbandage mit im wesentlichen in Umfangsrichtung und zueinander parallel verlaufenden Festigkeitsträgern. Die Erfindung betrifft ferner einen gemäß diesem Verfahren hergestellten Fahrzeugluftreifen.

Aus der EP 0 319 588 B1 ist beispielsweise ein Verfahren zur Herstellung eines Radialreifens bekannt, bei dem auf die äußere Oberfläche des aufgebauten Gürtels kontinuierlich und spiralartig in Umfangsrichtung ein organischer Fasercord oder mehrere organische Fasercorde gewickelt wird bzw. werden, um ein Band zur Verstärkung des Gürtels zu bilden. Dabei wird die Spannung, die an den organischen Fasercord angelegt wird, geändert, um ein Minimum im Zenitbereich des Reifens und ein Maximum an den Schulterbereichen des Reifen zu sein. Wird ein derartiges Bandagenband mit konstanter Wickelspannung und gleichbleibender Windungslänge pro Umfangswicklung auf den während des Wickelprozesses noch zylindrisch geformten Gürtel aufgebracht, so ist bei fertigem Reifen die Dehnung der Festigkeitsträger im Bandagenband im Zenitbereich des Reifen größer, in den Schulterbereichen kleiner. Die Spannung der Corde ist daher in den Schulterbereichen kleiner. Dies ist darauf zurückzuführen, daß die Bandage genauso wie der Gürtel im allgemeinen auf einer zylindrische Aufbautrommel aufgebracht wird und der Reifen schlußendlich in seiner fertig geformten und vulkanisierten Gestalt nicht mehr zylindrisch ist.

Bei einer weiteren in diesem europäischen Patent geoffenbarten alternativen Lösung wird vorgeschlagen, die Gürtelaufbautrommel nicht zylindrisch zu gestalten sondern von ihrer Kontur her so auszulegen, daß die Spulbandage schon gemäß ihrer Lage im fertigen Reifen aufgebracht wird.

Wie die bereits oben beschriebene Lösung ist auch diese Lösung nicht optimal, da einerseits die Änderungen bzw. Anpassungen der Wickelspannung oder Aufzugsspannung im wesentlichen nur auf Schätzungen beruhen und andererseits beim Vulkanisationsprozess eines Reifens Verschiebungen in der Masseverteilung des Reifens im Laufstreifenbereich, durch das Einprägen des Laufstreifenprofiles auch Deformationen, stattfinden, die kaum Berücksichtigung finden können.

Hier setzt nun die Erfindung ein, deren Aufgabe darin besteht, ein Verfahren zur Herstellung eines Reifens mit einer gespulten Bandage vorzuschlagen, das die genannten Nachteile nicht aufweist.

Gelöst wird die gestellte Aufgabe erfindungsgemäß dadurch, daß die Aufzugsspannung der Gürtelbandage unter Berücksichtigung der dynamischen Kontur eines zumindest im wesentlichen baugleichen Referenzreifens, der jedoch ohne Gürtelbandage oder mit einer Gürtelbandage definierter Aufzugsspannung gefertigt wurde, aufgebracht wird.

Gemäß dem erfindungsgemäßen Verfahren wird daher erstmalig die tatsächliche dynamische Kontur eines Referenzreifens bei der Ermittlung der optimalen Aufzugsspannung bzw. der Ermittlung der optimalen Änderung derselben über die Bandagenbreite berücksichtigt. Die erwähnten Einflüsse auf den Reifen durch dessen Fertigstellung und Vulkanisation in einer Form können daher auch mitberücksichtigt werden.

Um möglichst verläßliche Ausgangswerte für die dynamische Kontur des Referenzreifens zu erhalten, wird diese auf einem Reifenprüfstand bei Geschwindigkeiten höher als 150 km/h ermittelt.

Auf besonders einfache Weise läßt sich die dynamische Kontur durch Abtasten der Reifenoberfläche im Laufstreifenbereich ermitteln, wobei ein zuverlässiges Abtasten insbesondere mittels eines Lasers möglich ist.

Die Daten über die ermittelte dynamische Kontur des Referenzreifens werden elektronisch gespeichert und in einem Rechnerprogramm zur Steuerung der Aufzugsspannung bzw. Änderung derselben beim Aufbringen auf den herzustellenden Reifen weiterverarbeitet.

Der gemäß dem erfindungsgemäß Verfahren hergestellte Fahrzeugluftreifen kann so gefertigt sein, daß das erwähnte ungleichmäßige Umfangswachstum bei hoher Fahrgeschwindigkeit nicht oder kaum mehr stattfindet. Dies gewährleistet auch einen gleichmäßigen Laufstreifenabrieb.

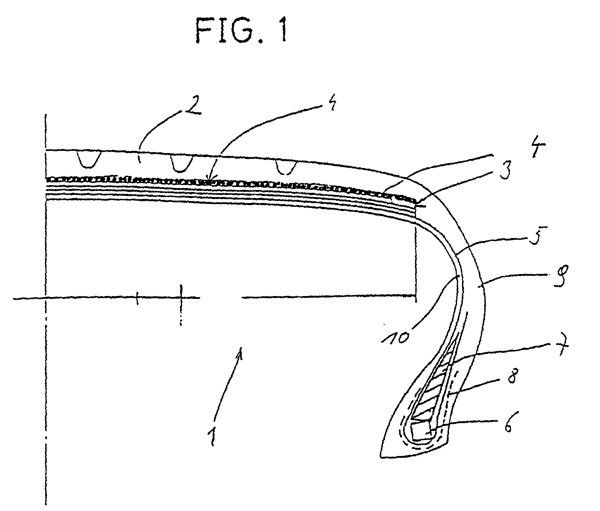

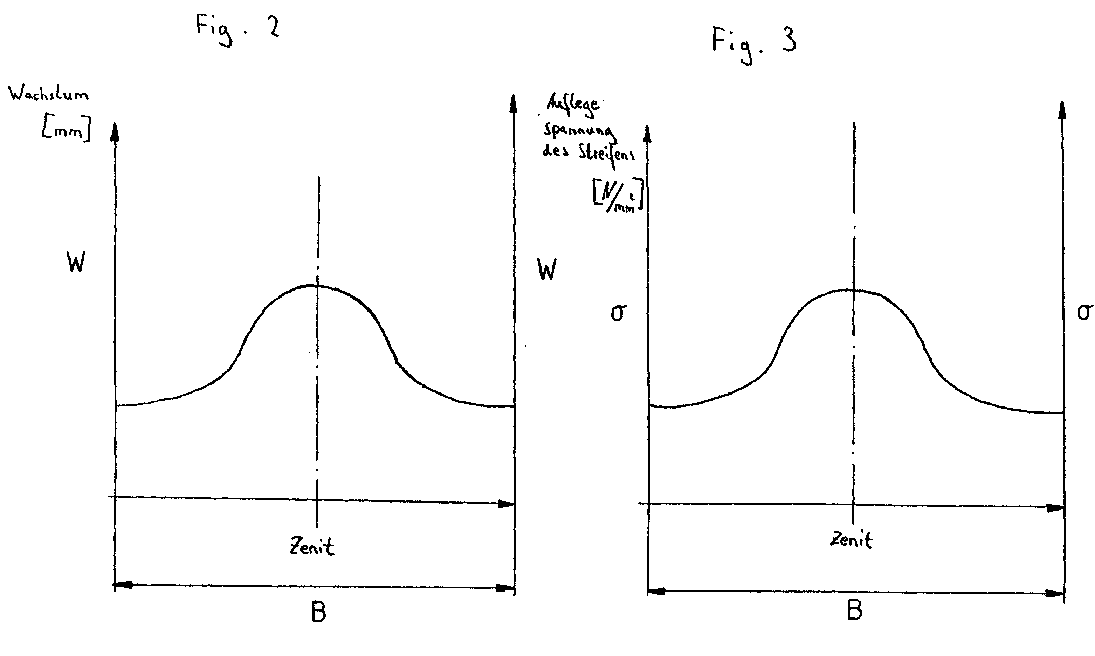

Weitere Merkmale, Vorteile und Einzelheiten der Erfindung werden nun anhand der Zeichnung näher erläutert. Dabei zeigt Fig. 1 ein Ausführungsbeispiel eines Reifens mit Bandage im Querschnitt, Fig. 2 und Fig.3 zeigen Diagramme, wobei Fig. 2 schematisch ein Beispiel einer dynamischen Kontur eines Fahrzeugluftreifens, der ohne Gürtelbandage gefertigt wurde, enthält und Fig. 3 ein Diagramm, welches die zu einem Reifen mit der dynamischen Kontur gemäß Fig. 2 passende Aufzugsspannung für eine gewickelte Gürtelbandage veranschaulicht.

Fig. 1 zeigt beispielhaft den Aufbau eines Fahrzeugluftreifens anhand einer seiner Hälften im Querschnitt. Der Reifen umfaßt einen profilierten Laufstreifen 2, einen Gürtel 3, eine Gürtelbandage 4, eine im vorliegenden Ausführungsbeispiel einlagig ausgeführte Radialkarkasse 5, die um je einen Wulstkern 6 in herkömmlicher Weise gelegt ist, je ein Kernprofil 7 radial außerhalb des Wulstkernes 6, Wulstschutzstreifen 8, je eine Seitenwand 9 und eine luftdicht ausgeführte Innenplatte 10. Der Gürtel setzt sich aus mehreren Gürtellagen, insbesondere aus zwei Gürtellagen, mit in jeder Lage parallel verlaufenden Festigkeitsträgern, insbesondere aus Stahlcord, zusammen, wobei die Festigkeitsträger in diesen beiden benachbarten Lagen einander kreuzen. Üblicherweise wird die Anordnung so getroffen, daß die parallel zueinander verlaufenden Stahlcorde in jeder Gürtellage mit der Umfangsrichtung des Reifens einen spitzen Winkel in der Größenordnung von 15 bis 30°, insbesondere von 20 bis 25°, einschließen.

Die Gürtelbandage 4 ist, wie es auch aus dem Stand der Technik bekannt ist, als sogenannte Spulbandage ausgeführt, bei der ein Bandagenstreifen, welcher aus in eine Gummimischung eingebetteten, in Längsrichtung des Streifens verlaufenden und wärmeschrumpffähigen textilen Festigkeitsträgern besteht, um den Gürtel gewickelt bzw. gespult wird. Der Bandagenstreifen kann beispielsweise mit Nylonfäden verstärkt sein, wobei mehrere Fäden pro Zentimeter Streifenbreite verwendet werden. Sieben bis zwölf Fäden pro Zentimeter Streifenbreite sind dabei üblich. Der Bandagenstreifen selbst besitzt üblicherweise eine Breite von 10 bis 15mm.

Insbesondere in Abhängigkeit vom Aufbau, vom Querschnitt bzw. der Querschnittskontur und von der Ausgestaltung des Laufstreifenprofiles besitzt ein Reifen bei einer bestimmten Geschwindigkeit unter der auf ihn wirkenden Zentrifugalkraft eine bestimmte sogenannte dynamische Kontur. Als dynamische Kontur wird die Außenkontur eines Reifen im Laufstreifenbereich bezeichnet, die, ebenfalls in Abhängigkeit von den genannten Parametern, mehr oder weniger von derAußenkontur des ruhenden Reifens abweicht. Hochgeschwindigkeitsreifen besitzen dabei oft eine dynamische Kontur, die durch das Umfangswachstum charakterisiert ist, welches üblicherweise eine Durchmesservergrößerung des Reifens im betrachteten Bereich von 1 bis 2mm bewirkt. Fig. 2 zeigt nun anhand eines beispielhaften Diagrammes eine dynamische Kontur, wobei mit W die relative Durchmesservergrößerung und mit B die Breite des Laufstreifens im betrachteten Bereich, die insbesondere der Breite in der Bodenaufstandsfläche entspricht, bezeichnet sind. Bei diesem speziellen Reifen, dessen dynamische Kontur in Fig. 2 eingezeichnet ist, ist das Wachstum im Laufstreifenmittelbereich infolge von dort vorliegenden höheren Gummimengen, etwa aufgrund der Ausgestaltung des Profiles, größer als in den Seitenbereichen.

Die dynamische Kontur eines Reifens kann auf einem Prüfstand, wo der auf die Felge aufgezogene und unter Innendruck gesetzte Reifen in Rotation versetzt wird, wobei die eingestellte Geschwindigkeit beispielsweise 200 km/h entspricht, ermittelt werden. Die dynamische Kontur kann dabei durch Abtasten der Oberfläche des Reifens bei der entsprechenden Geschwindigkeit, etwa mittels eines Lasers, festgestellt werden und über ein geeignetes Rechnerprogramm abgespeichert und ausgewertet werden.

Im Rahmen der vorliegenden Erfindung wird nun vorgeschlagen, zu einem Reifen einer bestimmten Bauart und mit einem bestimmten Laufstreifenprofil einen Referenzreifen zu bauen, welcher jedoch ohne Spulbandage oder mit einer Spulbandage mit definierter, insbesondere konstanter Aufzugsspannung versehen wurde, für diesen Reifen die dynamische Kontur zu ermitteln und für einen baugleichen Serienreifen, der jedoch mit einer Spulbandage versehen wird, die Aufzugsspannung derselben bzw. deren Änderung in Abhängigkeit von der ermittelten dynamischen Kontur festzulegen.

In der Praxis kann dabei so vorgegangen werden, daß für den entsprechend gebauten Referenzreifen auf einem Reifenprüfstand die dynamische Kontur, insbesondere im Geschwindigkeitsbereich zwischen 150 und 220 km/h, in Abhängigkeit vom Speedindex des Reifens, ermittelt wird und, wie schon erwähnt, in einem entsprechenden Rechnerprogramm gespeichert wird. In weiterer Folge wird durch das Rechnerprogramm aus der dynamischen Kontur die erforderliche Variation der Aufzugsspannung ermittelt, um ein möglichst weitgehendes Verschwinden der mit dem Referenzreifen festgestellten dynamischen Kontur bzw. eine möglichst weitgehenden Anpassung der dynamischen Kontur an die Kontur des ruhenden Reifens zu erzielen. Fig. 3 zeigt ein Diagramm, welches die Variation der Aufzugs- bzw. Wickelspannung σ über die Reifenbreite B versinnbildlicht.

Beim erfindungsgemäßen Verfahren kann für einen Reifen bestimmter Bauart und mit einem bestimmten Profil im allgemeinen die Reifendimension, zumindest für eine Anzahl von unterschiedlichen Reifendimensionen, außer Acht gelassen werden, das heißt, es reicht ein Referenzreifen einer einzigen Dimension.

## Patentansprüche

1. Verfahren zur Herstellung eines Fahrzeugluftreifens mit einem Laufstreifen, einer Radialkarkasse, einem zumindest einlagigen Gürtel und einer spiralförmig gewickelten Gürtelbandage mit im wesentlichen in Umfangsrichtung und zueinander parallel verlaufenden Festigkeitsträgern, **dadurch gekennzeichnet, daß** die Aufzugsspannung der Gürtelbandage unter Berücksichtigung der dynamischen Kontur eines zumindest im wesentlichen baugleichen Referenzreifens, der jedoch ohne Gürtelbandage oder mit einer Gürtelbandage definierter Aufzugsspannung gefertigt wurde, aufgebracht wird.

2. Verfahren nach Anspruch 1, **dadurch gekennzeichnet, daß** die dynamische Kontur des Referenzreifens auf einem Reifenprüfstand bei Geschwindigkeiten höher als 150 km/h ermittelt wird.

3. Verfahren nach Anspruch 1 oder 2, **dadurch gekennzeichnet, daß** die dynamische Kontur durch Abtasten der Reifenoberfläche im Laufstreifenbereich ermittelt wird.

4. Verfahren nach Anspruch 3, **dadurch gekennzeichnet, daß** das Abtasten mittels eines Lasers durchgeführt wird.

5. Verfahren nach einem der Ansprüche 1 bis 4, **dadurch gekennzeichnet, daß** die dynamische Kontur des Referenzreifens elektronisch gespeichert und in einem Rechnerprogramm zur Steuerung der Aufzugsspannung bzw. Änderung derselben beim Aufbringen auf den herzustellenden Reifen weiterverarbeitet wird.

6. Fahrzeugluftreifen, welcher nach dem Verfahren gemäß einem oder mehreren der Ansprüche 1 bis 5 gefertigt ist.

## Claims

1. Method of producing a pneumatic vehicle tyre with a tread strip, a radial carcase, a belt which has at least one ply, and a helically wound belt bandage having reinforcing members which extend substantially in the circumferential direction and parallel to one another, **characterised in that** the stretching tension of the belt bandage is applied with regard to the dynamic contour of a reference tyre, which is at least substantially structurally identical, but which has been manufactured without a belt bandage or has been manufactured with a belt bandage having specific stretching tension.

2. Method according to claim 1, **characterised in that** the dynamic contour of the reference tyre is determined on a tyre test bed at speeds higher than 150 km/h.

3. Method according to claim 1 or 2, **characterised in that** the dynamic contour is determined by scanning the tyre surface in the tread strip region.

4. Method according to claim 3, **characterised in that** the scanning is accomplished by means of a laser.

5. Method according to one of claims 1 to 4, **characterised in that** the dynamic contour of the reference tyre is electronically stored and processed further in a computer program to control the stretching tension or respectively to change said tension when applied to the tyre to be produced.

6. Pneumatic vehicle tyre which is manufactured by the method according to one or more of claims 1 to 5.

## Revendications

1. Procédé de fabrication d'un pneumatique de véhicule comprenant une bande de roulement, une carcasse radiale, une ceinture comportant au moins une couche et un bandage de ceinture enroulé en forme de spirale comprenant des nappes de renfort s'étendant pratiquement dans la direction périphérique et parallèles entre elles, **caractérisé en ce que** la tension de traction du bandage de la ceinture est appliquée en tenant compte du contour dynamique d'au moins un pneumatique de référence, de construction pratiquement identique, qui est fabriqué cependant sans bandage de ceinture ou avec un bandage de ceinture ayant une tension de traction définie.

2. Procédé selon la revendication 1, **caractérisé en ce que** le contour dynamique du pneumatique de référence est calculé sur un banc d'essai des pneumatiques à des vitesses supérieures à 150 km/h.

3. Procédé selon la revendication 1 ou 2, **caractérisé en ce que** le contour dynamique est calculé par l'analyse de la surface du pneumatique dans la zonc dc la bande de roulement.

4. Procédé selon la revendication 3, **caractérisé en ce que** l'analyse est effectuée au moyen d'un laser.

5. Procédé selon l'une quelconque des revendications 1 à 4, **caractérisé en ce que** le contour dynamique du pneumatique de référence est mémorisé électroniquement et continue à être traité dans un programme de calcul servant à commander la tension de traction ou la modification de cette tension lorsqu'elle est appliquée au pneumatique à produire.

6. Pneumatique de véhicule qui est fabriqué conformément au procédé selon l'une quelconque ou plusieurs des revendications 1 à 5.
